# EUROPÄISCHE PATENTSCHRIFT

(11) **EP 2 414 229 B1**
(45) Veröffentlichungstag und Bekanntmachung des Hinweises auf die Patenterteilung: **21.08.2013**
(21) Anmeldenummer: 10704838.1
(22) Anmeldetag: 23.02.2010
(51) Int. Cl.: B64C 1/40, F16L 59/02, G10K 11/16

(54) **LUFTFAHRZEUG MIT EINEM ISOLIERUNGSSYSTEM ZUR WÄRME- UND SCHALLISOLIERUNG**
THERMAL AND ACOUSTICAL AIRCRAFT INSULATION
ISOLATION THERMIQUE ET ACOUSTIQUE POUR AÉRONEF

(30) Priorität: 30.03.2009 DE 102009015590; 30.03.2009 US 164576 P
(43) Veröffentlichungstag der Anmeldung: 08.02.2012
(73) Patentinhaber: Airbus Operations GmbH, 21129 Hamburg (DE)
(72) Erfinder: GOEHLICH, Robert Alexander, 22761 Hamburg (DE); BIESEK, Steffen, 21129 Hamburg (DE); SAYILGAN, Cihangir, 20257 Hamburg (DE)
(74) Vertreter: Kopf, Korbinian Paul
(86) Internationale Anmeldenummer: PCT/EP2010/052294
(87) Internationale Veröffentlichungsnummer: WO 2010/112270

(56) Entgegenhaltungen:
- WO-A1-2005/095206
- FR-A- 1 022 731
- GB-A- 1 172 133
- US-A- 2 540 331
- US-A- 3 867 244
- US-A- 4 291 851

## Beschreibung

### GEBIET DER ERFINDUNG

Die Erfindung betrifft Isoliersysteme zur Wärme- und Schallisolierung. Insbesondere betrifft die Erfindung ein Luftfahrzeug mit einem Isolationssystem zur Wärme- und Schallisolierung. Ferner betrifft die Erfindung ein Verfahren zur Wärme- und Schallisolierung von einem Luftfahrzeug.

### HINTERGRUND DER ERFINDUNG

Herkömmliche Isolierungen in einem Flugzeug bestehen aus einem watteähnlichen Isoliermaterial, das in Folie eingeschweißt wird. Das Einschweißen schützt das Isoliermaterial vor Nässe. Ohne die Einschweißfolie würde sich das Isoliermaterial mit Wasser vollsaugen was eine starke Gewichtserhöhung zur Folge hätte.

Die Isolierung wird im Rumpf des Luftfahrzeugs montiert, bevor die Kabine und die anderen Systeme eingebaut werden. Damit die Isolierung an die Struktur des Flugzeugs passt, müssen für viele Stellen komplizierte Formen eingeschweißt werden (zum Beispiel an den Fenstern, Türen, etc.). Für die anschließende Montage der Systeme müssen die entsprechenden Halter zugänglich sein, also durch die Isolierung hindurchragen. Dazu werden Durchbrüche in der Folie vorgesehen, durch die man die Halterung dann erreichen kann. Diese Durchbrüche müssen anschließend aufwändig mit Klebern verschlossen werden, damit zum Beispiel keine Feuchtigkeit (Kondenswasser etc.) an das Isoliermaterial bzw. an dahinter befindliche Strukturen gelangen kann.

Aus der DE 10 2006 023 299 A1 und der WO 2007/131583 A1 ist eine Schallisolierung einer Flugzeugrumpfstruktur bekannt.

Die DE 10 2007 008 986 A1 und die WO 2008/101986 A1 zeigen einen Rumpf eines Luft- oder Raumfahrzeugs mit zumindest einem Schalenelement und einem Strukturelement und einem belüftbaren Zwischenraum zwischen dem Schalenelement und dem Strukturelement.

FR 1 022 731 A beschreibt ein Luftfahrzeug, an dessen Außenhaut drei Materialschichten angeordnet sind.

WO 2005/095206 A1 beschreibt eine Schaumisolierung für Luftfahrzeuge mit einer faserartigen Schicht.

### ZUSAMMENFASSUNG DER ERFINDUNG

Es kann als Aufgabe der Erfindung gesehen werden, eine Wärme- und Schallisolierung in einem Transportmittel anzugeben, die einfach und flexibel einsetzbar ist.

Es ist ein Luftfahrzeug mit einem Isolationssystem zur Wärme- und Schallisolierung sowie ein Verfahren zur Wärme- und Schallisolierung von einem Luftfahrzeug gemäß den Merkmalen der unabhängigen Ansprüche angegeben. Weiterbildungen der Erfindung werden durch die abhängigen Ansprüche verkörpert.

Gemäß einem Ausführungsbeispiel der Erfindung ist ein Luftfahrzeug mit einem Isolationssystem zur Wärme- und Schallisolierung mit einer Kabine, einer Außenhaut, einer Schalldämmungseinheit und einer Wärmedämmungseinheit angegeben. Die Schalldämmungseinheit ist zum Schallisolieren des Luftfahrzeugs ausgeführt, die Wärmedämmungseinheit ist zum Wärmeisolieren des Luftfahrzeugs ausgeführt und die Schalldämmungseinheit und die Wärmedämmungseinheit sind zwischen der Kabine und der Außenhaut angeordnet.

Ein derartiges Luftfahrzeug mit einem Isolationssystem ermöglicht es, die Herstellung und Montage der Wärme- und Schallisolierung zu vereinfachen, und die Arbeitszeit im Vergleich zur Herstellung und Montage einer integrierten einstückig ausgeführten Schall- und Wärmeisolierung zu verkürzen.

Ein derartiges Isoliersystem weist den Vorteil auf, dass der Isolierungsaufwand reduziert werden kann, indem die Aufgaben Schallisolierung und Wärmeisolierung auf getrennte, optimal ausgelegte Komponenten, nämlich der Schalldämmungseinheit und der Wärmedämmungseinheit aufgeteilt werden. Dabei ist eine Voraussetzung, dass die Kabine als Ganzes in den Rumpf eingebaut wird.

Die Wärmedämmungseinheit des Isolationssystems des Luftfahrzeugs besteht aus einem grob strukturierten Gewebe mit einer groben Faserung, die eine Kapillarbildung und damit ein Aufsaugen des Wassers bei Kontakt mit Wasser vermeidet. Somit muss die Wärmedämmungseinheit nicht eingeschweißt werden.

Ein derartiges Isolationssystem ermöglicht es, dass auch bei Flugzeugen mit Carbonfaser-Kunststoff-Bauweise (CFK Bauweise) nur eine Schalldämmungseinheit und eine Wärmedämmungseinheit benötigt werden.

Ein derartiges Isolationssystem im Luftfahrzeug ermöglicht es, dass das Gewebe der Wärmedämmungseinheit im Oberflurbereich, das heißt im oberen Bereich der Kabine, außerhalb des Rumpfes an der Kabine befestigt werden kann. Dort wo sich Fenster, Türen, Halter etc. befinden, kann die Wärmeisolierung einfach abgetrennt werden, ohne dass beispielsweise danach etwas geflickt werden muss.

Die Schalldämmungseinheit des Isolationssystems des Luftfahrzeugs kann dabei als schallschluckendes Bauteil ausgeführt sein und großflächig an der Außenhaut des Rumpfes angebracht werden.

Die Schalldämmungseinheit des Isolationssystems des Luftfahrzeugs kann geformt sein wie die schallschluckenden Wände eines Tonstudios. Durch die schalldämmende Geometrie und dem Material der Schalldämmungseinheit kann Schall absorbiert werden.

Ein derartiges Isolationssystem eines Luftfahrzeugs ermöglicht eine bessere Wärme- und Schallisolierung durch die Trennung der Aufgaben der Wärme- und Schallisolierung in eine Schalldämmungseinheit und eine Wärmedämmungseinheit und die Verwendung geeigneter Materialien und Designs für die Wärmedämmungseinheit und die Schalldämmungseinheit.

Das Isolationssystem des Luftfahrzeugs weist den Vorteil auf, dass eine einfache Herstellung der Isolierung, nämlich der Schalldämmungseinheit und der Wärmedämmungseinheit ermöglicht wird, da kein Einschweißen der Wärmedämmungseinheit mehr notwendig ist. Die Herstellung der Wärmeisolierung kann ähnlich der Herstellung eines Teppichs erfolgen und Wärmedämmung kann als Meterware produziert werden, da im Gegensatz zur eingeschweißten Wärmedämmungseinheit keine komplizierten Formen bei der Herstellung berücksichtigt werden müssen.

Ferner ermöglicht ein derartiges Isolationssystem eines Luftfahrzeugs eine im Vergleich zu einer eingeschweißten Wärmedämmungseinheit einfache Montage da kein Flicken einer Einschweißfolie notwendig ist und die Wärmeisolierung von außerhalb des Rumpfes an der Kabine befestigbar ist.

Durch ein derartiges Isolationssystem eines Luftfahrzeugs kann eine Zeitersparnis und eine Kostenersparnis aufgrund der einfachen Herstellung und der schnellen

Montage des Isolationssystems im Vergleich zur Herstellung und Montage einer eingeschweißten Wärmedämmung ermöglicht werden.

Ein derartiges Isolationssystem eines Luftfahrzeugs weist ferner den Vorteil auf, dass durch die Aufteilung der Aufgaben Wärme- und Schallisolierung eine Qualitätssteigerung erreicht werden kann.

Gemäß einem weiteren Ausführungsbeispiel der Erfindung ist die Schalldämmung an der Außenhaut des Luftfahrzeugs angebracht, wobei die Wärmedämmungseinheit an der Kabine des Luftfahrzeugs angebracht ist.

Gemäß einem weiteren Ausführungsbeispiel ist die Schalldämmung an die Außenhaut des Luftfahrzeugs von innen angeklebt, und die Wärmdämmungseinheit ist wie ein Fischernetz über die Kabine abgelegt.

Gemäß einem weiteren Ausführungsbeispiel der Erfindung ist zwischen der Außenhaut und der Kabine ein Luftspalt vorhanden.

Gemäß einem weiteren Ausführungsbeispiel der Erfindung ist zwischen der Wärmedämmungseinheit und der Schalldämmungseinheit ein Luftspalt vorhanden.

Gemäß einem weiteren Ausführungsbeispiel der Erfindung ist die Schalldämmungseinheit an einer ersten Seite und die Wärmedämmungseinheit einer zweiten Seite der Kabine angebracht.

Gemäß einem weiteren Ausführungsbeispiel der Erfindung ist die Schalldämmungseinheit an der Wärmedämmungseinheit angebracht, wobei die Kombination aus Schalldämmungseinheit und Wärmedämmungseinheit an der Kabine angebracht ist. Das bedeutet in anderen Worten, dass die Schalldämmungseinheit beispielsweise an der Wärmedämmungseinheit angebracht sein kann und dann die beiden verbundenen Dämmungseinheiten an der Kabine angebracht werden können. Die beiden verbundenen Dämmungseinheiten können beispielsweise im Bereich zwischen Kabine und Außenhaut oder an dem von der Außenwand abgewandten Teil der Kabine im Inneren der Kabine angebracht werden.

Gemäß einem weiteren Ausführungsbeispiel der Erfindung sind die Schalldämmungseinheit und die Wärmedämmungseinheit aneinander angebracht an der Außenhaut angebracht. Das bedeutet in anderen Worten, dass die Schalldämmungseinheit an der Wärmedämmungseinheit angebracht werden kann und dann die verbundenen beiden Dämmungseinheiten an die Außenhaut in einem Bereich zwischen Kabine und Außenhaut angebracht werden können.

Gemäß einem weiteren Ausführungsbeispiel der Erfindung ist die Schalldämmungseinheit an der Außenhaut von innen durch Kleben angebracht.

Gemäß einem weiteren Ausführungsbeispiel der Erfindung ist die Schalldämmungseinheit aus einem Schalldämmmaterial aus der Gruppe bestehend aus Schaumgummi, Gummi, Polystyrol, einem schalldämmenden Kunststoff, einem schalldämmenden Naturwerkstoff, etc. gebildet.

Gemäß einem weiteren Ausführungsbeispiel der Erfindung weist die Wärmedämmungseinheit eine Vielzahl von Streifen und einen Verbindungsstreifen auf, wobei der Verbindungsstreifen zum Fixieren der Streifen ausgeführt ist.

Gemäß einem weiteren Ausführungsbeispiel der Erfindung sind die Streifen senkrecht zu dem Verbindungsstreifen angeordnet.

Gemäß einem weiteren Ausführungsbeispiel der Erfindung sind die Streifen in regelmäßigen Abständen an dem Verbindungsstreifen fixiert.

Die Streifen können durch Ankleben bzw. Anschweißen an den Verbindungsstreifen fixiert sein.

Gemäß einem weiteren Ausführungsbeispiel der Erfindung sind die Streifen und die Verbindungsstreifen der Wärmedämmungseinheit durch Ankleben und/oder Einhaken an der Außenhaut des Luftfahrzeugs befestigt.

Gemäß einem weiteren Ausführungsbeispiel der Erfindung sind die Streifen aus einem Material aus einer Gruppe bestehend aus Kunststoff, Naturwerkstoff, Polyurethan, Polycarbonat, Schaumstoff, Glasfaser, Glaswolle, Polyamid, glasfaserverstärkter Kunststoff (GFK) gebildet, wobei der Verbindungsstreifen aus einem Material aus der Gruppe bestehend aus Kunststoff, Naturwerkstoff, Polyurethan, Polycarbonat, Schaumstoff, Glasfaser, Glaswolle, Polyamid, glasfaserverstärkter Kunststoff (GFK) gebildet ist.

Gemäß einem weiteren Ausführungsbeispiel der Erfindung ist die Wärmedämmungseinheit zum Auftrennen, ohne dass hierdurch ein Ausfransen der Wärmedämmungseinheit bewirkt wird, ausgeführt. Ein Auftrennen ohne Ausfransen der Wärmedämmungseinheit wird dadurch ermöglicht, dass die Streifen der Wärmedämmungseinheit bei der Auftrennung nicht beschädigt werden, sondern nur verschoben werden. Ein Zuschneiden des Gewebes der Wärmedämmungseinheit kann bei den Verbindungsstreifen erfolgen, so dass die Stabilität des Gewebes nicht verringert wird bzw. ein Ausfransen des Gewebes beim Zuschneiden vermieden werden kann.

Gemäß einem weiteren Ausführungsbeispiel der Erfindung ist ein Verfahren zur Wärme- und Schallisolierung von einem Luftfahrzeug angegeben mit einem ersten Schritt zum Anbringen einer Schalldämmungseinheit und einer Wärmedämmungseinheit zwischen einer Kabine und einer Außenhaut des Luftfahrzeugs.

Gemäß einem weiteren Ausführungsbeispiel der Erfindung weist das Verfahren weiterhin das Anbringen einer Schalldämmungseinheit an der Außenhaut des Luftfahrzeugs sowie das Anbringen einer Wärmedämmungseinheit an der Kabine des Luftfahrzeugs auf, wobei die Wärmedämmungseinheit aus einem grobstrukturierten Gewebe mit einer groben Faserung zum Vermeiden einer Kapillar-bildung gebildet ist und damit ein Aufsaugen der Wärmedämmungseinheit mit Wasser vermeidet. Gemäß einem weiteren Ausführungsbeispiel der Erfindung weist das Verfahren weiterhin das Einführen der Kabine in einen Luftfahrzeugrumpf und das Durchbohren oder Durchtrennen der Wärmedämmungseinheit an bestimmten Stellen zum Hindurchführen von Haltern oder anderer Einbauten für die Kabine auf.

Es ist insbesondere zu beachten, dass die hier und im Folgenden im Hinblick auf das Luftfahrzeug mit dem Isolationssystem beschriebenen Merkmale auch in dem Verfahren implementierbar sind und umgekehrt.

Diese und andere Aspekte der Erfindung werden durch die Bezugnahme auf die hiernach beschriebenen beispielhaften Ausführungsformen erläutert und verdeutlicht.

### KURZE BESCHREIBUNG DER FIGUREN

- Fig. 1: zeigt ein Luftfahrzeug mit einem Isolationssystem zur Wärme- und Schallisolierung gemäß einem Ausführungsbeispiel der Erfindung.
- Fig. 2a: zeigt eine Außenhaut mit einer Wärmedämmungseinheit in Form eines Gewebes gemäß einem Ausführungsbeispiel der Erfindung.
- Fig. 2b: zeigt die Außenhaut mit der Wärmedämmungseinheit der Fig. 2a und eine einzelne sowie an der Außenhaut angeordnete Kabine gemäß einem Ausführungsbeispiel der Erfindung.
- Fig. 3: zeigt ein Segment einer Außenhaut mit einer Kabine sowie Gewebeflächen von Wärmedämmungseinheiten und ein Flugzeugrumpfsegment gemäß einem Ausführungsbeispiel der Erfindung.
- Fig. 4: zeigt eine Außenhaut mit einer Schalldämmungseinheit und ein Flugzeugrumpfsegment gemäß einem Ausführungsbeispiel der Erfindung.
- Fig. 5: zeigt ein Flussdiagramm eines Verfahrens zur Wärme- und Schallisolierung von einem Luftfahrzeug gemäß einem Ausführungsbeispiel der Erfindung.

### DETAILLIERTE BESCHREIBUNG BEISPIELHAFTER AUSFÜHRUNGSBEISPIELE

Im Folgenden werden unter Bezugnahme auf die beigefügten Figuren Ausführungsbeispiele der Erfindung beschrieben.

Die Darstellung in den Figuren ist schematisch und nicht maßstäblich. In den folgenden Figuren werden für gleiche oder ähnliche Elemente die gleichen Bezugszeichen verwendet.

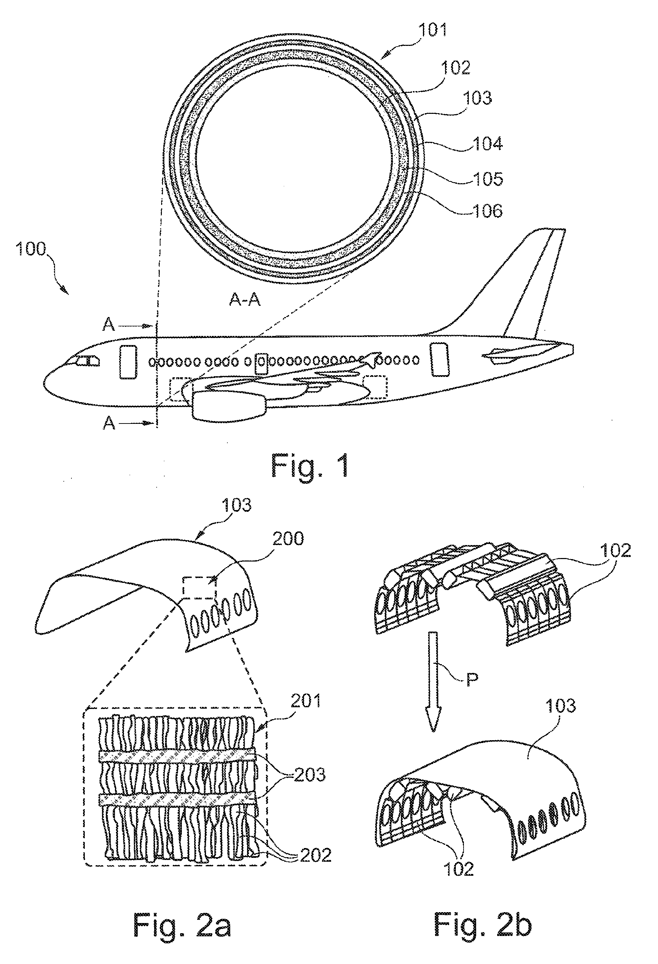

Fig. 1 zeigt eine Seitenansicht eines Luftfahrzeugs 100 mit einer Schnittlinie A-A quer durch den Flugzeugrumpf.

Gemäß der Schnittlinie A-A zeigt die Figur 1 weiterhin einen Querschnitt A-A eines Isolationssystems 101 mit einer kreisförmigen Form.

Das Isolationssystem 101 weist eine innen angeordnete kreisförmigen Kabine 102, eine daran vom Mittelpunkt des kreisförmigen Isolationssystems 101 gesehen außen angeordneten Wärmedämmungseinheit 105, einen daran anschließenden Luftspalt 106 und eine daran anschließend eine Schalldämmungseinheit 104 auf, die an einer kreisförmigen Außenhaut 103 des Luftfahrzeugs 100 angebracht ist.

Die Schalldämmungseinheit 104 ist zum Schallisolieren des Luftfahrzeugs 100 ausgeführt. Die Wärmedämmungseinheit 105 ist zum Wärmeisolieren des Luftfahrzeugs 100 ausgeführt.

Fig. 2a zeigt einen Teil einer Außenhaut 103 eines Luftfahrzeugs mit einem Abschnitt 200, der vergrößert dargestellt ist. Der vergrößerte Abschnitt zeigt ein grob strukturiertes Gewebe 201, das eine Wärmedämmungseinheit darstellt, mit einer groben Faserung. Das Gewebe 201 ist zum Vermeiden einer Kapillarbildung gebildet und verhindert damit ein Aufsaugen der Wärmedämmungseinheit 105 mit Wasser.

Das Gewebe 201 bzw. die Wärmedämmungseinheit weist eine Vielzahl von Streifen 202 auf, die beispielsweise im Wesentlichen rechtwinklig zu beispielsweise zwei Verbindungsstreifen 203 und im Wesentlichen zueinander parallel angeordnet sind, wobei die Streifen 202 an die Verbindungsstreifen 203 angenäht sind und somit die Verbindungsstreifen 203 die Streifen 202 fixieren.

Die Streifen 202 und die Verbindungsstreifen 203 können aus einem Kunststoff bzw. einem Naturwerkstoff gebildet sein. Die Streifen 202 können durch Ankleben bzw. Anschweißen an den Verbindungsstreifen 203 fixiert werden.

Die Streifen 202 bzw. die Verbindungsstreifen 203 können durch Ankleben bzw. Einhaken an der Außenhaut 103 befestigt werden. Somit kann das Gewebe 201 durch Ankleben bzw. Einhaken an der Außenhaut 103 befestigt werden.

Ein Zuschneiden des Gewebes 201 kann bei den Verbindungsstreifen 203 erfolgen, ohne dass die Stabilität des Gewebes 201 zerstört wird bzw. so dass ein Ausfransen des Gewebes beim Zuschneiden vermieden werden kann.

Fig. 2b zeigt eine Kabine 102 und in einer Richtung des Pfeils P in etwa einem Pfeillängenabstand davon eine Kabine 102, die an dem Teil der Außenhaut 103 der Fig. 2a mit dem grob strukturieren Gewebe 201, das als Wärmedämmungseinheit fungiert, montiert ist.

Die Wärmedämmungseinheit bzw. das Gewebe 201 wird an die Kabine angebracht indem es über die Außenhaut 103 der Kabine 102 abgewickelt und fällt dabei bis zu einer Höhe eines Fußbodens, auf dem die Kabine 102 steht, herunter.

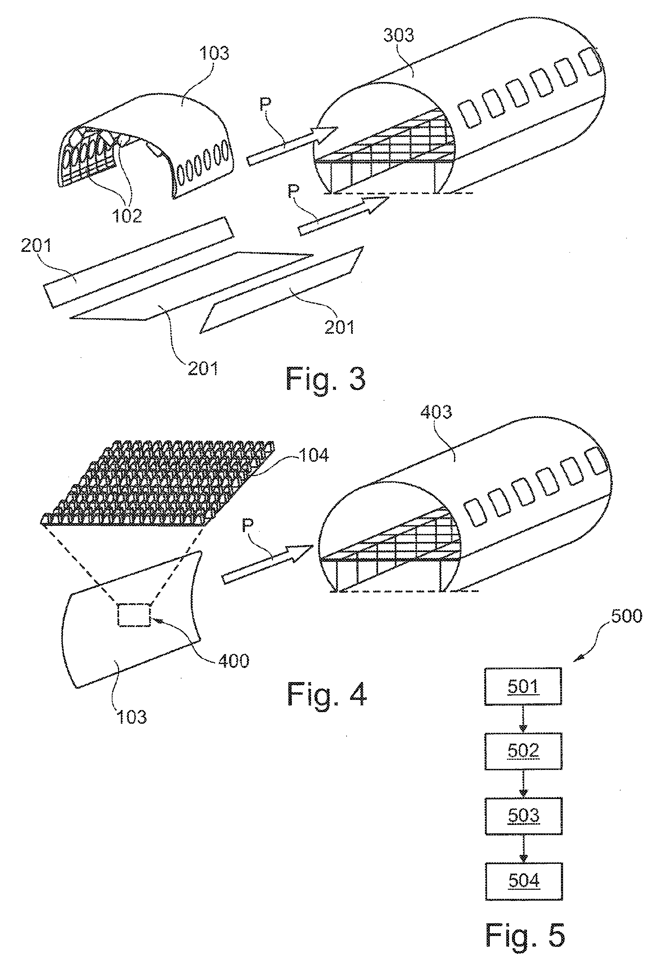

Fig. 3 zeigt einen Teil einer Außenhaut 103 mit einer Kabine 102, die an dem Teil der Außenhaut 103 angebracht ist, und drei Gewebeflächen 201, die als Wärmedämmungseinheiten fungieren. Der Teil der Außenhaut 103 mit den Kabinensegmenten 102 und die Gewebeflächen 201 können zu einer wärmeisolierten Außenhaut 303 montiert werden. Die wärmeisolierte Außenhaut 303 ist in einer Richtung der Pfeile P in etwa einem Pfeillängenabstand von dem Teil der Außenhaut 103 angeordnet.

Fig. 4 zeigt einen Teil einer Außenhaut 103 mit einem Abschnitt 400, der vergrößert dargestellt ist. Der vergrößerte Abschnitt 400 zeigt eine Schalldämmungseinheit 104 mit einer Wellengeometrie zum Dämpfen des Schalls, die an dem Teil der Außenhaut 103 angebracht ist. Die Schalldämmungseinheit 104 kann dabei beispielsweise die Breite eines Spanten aufweisen und ist an der Außenhaut 103 von innen beispielsweise durch Kleben angebracht.

Der Teil der Außenhaut 103 ist mit weiteren Teilen einer Außenhaut zu einer schallisolierten Außenhaut 403 montierbar, beispielsweise durch Kleben, die in etwa einem Pfeillängenabstand des Pfeils P von dem Teil der Außenhaut 103 angeordnet ist.

Fig. 5 zeigt ein Flussdiagramm eines Verfahrens 500 zur Wärme- und Schallisolierung von einem Luftfahrzeug mit den folgenden Schritten: In einem Schritt 501 erfolgt ein Anbringen der Schalldämmungseinheit an der Außenhaut des Luftfahrzeugs. In einem weiteren Schritt 502 erfolgt ein Anbringen der Wärmedämmungseinheit an der Kabine des Luftfahrzeugs. In Schritt 503 wird die Kabine in einen Luftfahrzeugrumpf eingeführt. In Schritt 504 wird die Wärmedämmungseinheit an bestimmten Stellen durchbohrt oder durchtrennt, um Halter oder andere Einbauten für die Kabine hindurchzuführen.

Ergänzend ist darauf hinzuweisen, dass "umfassend" oder "aufweisend" keine anderen Elemente oder Schritte ausschließt und "eine" oder "ein" keine Vielzahl ausschließt. Insbesondere kann das Luftfahrzeug mit einem Isolationssystem beispielsweise mehr als eine Kabine, mehr als eine Außenhaut, mehr als eine Schalldämmungseinheit, mehr als eine Wärmedämmungseinheit, mehr als einen Luftspalt sowie die Wärmedämmungseinheit mehr als einen Streifen und mehr als einen Verbindungsstreifen aufweisen.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, sofern sie den Schutzbereich der Patentansprüche nicht übersteigen. Bezugszeichen in den Ansprüchen sind nicht als Einschränkung anzusehen.

## Patentansprüche

1. Luftfahrzeug (100) mit einem Iso lationssystem (101) zur Wärme- und Schallisolierung, das Luftfahrzeug (100) aufweisend:
eine Kabine (102);
eine Außenhaut (103);
eine Schalldämmungseinheit (104);
eine Wärmedämmungseinheit (105);
wobei die Schalldämmungseinheit (104) zum Schallisolieren des Luftfahrzeugs (100) ausgeführt ist;
wobei die Wärmedämmungseinheit (105) zum Wärmeisolieren des Luftfahrzeugs (100) ausgeführt ist;
wobei die Schalldämmungseinheit (104) und die Wärmedämmungseinheit (105) zwischen der Kabine (102) und der Außenhaut (103) angeordnet sind; **dadurch gekennzeichnet, daß**
die Wärmedämmungseinheit (105) aus einem grobstrukturierten Gewebe (201) mit einer groben Faserung zum Vermeiden einer Kapillarbildung gebildet ist und damit ein Aufsaugen der Wärmedämmungseinheit (105) mit Wasser vermeidet.

2. Luftfahrzeug (100) nach Anspruch 1
wobei die Schalldämmungseinheit (104) an der Außenhaut (103) des Luftfahrzeugs (100) angebracht ist;
wobei die Wärmedämmungseinheit (105) an der Kabine (102) des Luftfahrzeugs (100) angebracht ist.

3. Luftfahrzeug (100) nach einem der vorhergehenden Ansprüche,
wobei zwischen der Außenhaut (103) und der Kabine (102) ein Luftspalt (106) vorhanden ist.

4. Luftfahrzeug (100) nach einem der Ansprüche 1 oder 3,
wobei die Schalldämmungseinheit (104) an der Wärmedämmungseinheit (105) angebracht ist; und
wobei die Kombination aus Schalldämmungseinheit (104) und Wärmedämmungseinheit (105) an der Kabine (102) angebracht ist.

5. Luftfahrzeug (100) nach einem der Ansprüche 1 oder 3,
wobei die Schalldämmungseinheit (104) und die Wärmedämmungseinheit (105) aneinander angebracht an der Außenhaut (103) angebracht sind.

6. Luftfahrzeug (100) nach einem der vorhergehenden Ansprüche,
wobei die Schalldämmungseinheit (104) aus einem schalldämmenden Material aus einer Gruppe bestehend aus Schaumgummi, Gummi, Polystyrol, schalldämmenden Kunststoff und schalldämmenden Naturwerkstoff gebildet ist,

7. Luftfahrzeug (100) nach einem der vorhergehenden Ansprüche,
wobei die Wärmedämmungseinheit (105) aufweist:
eine Vielzahl von Streifen (202);
einen Verbindungsstreifen (203);
wobei der Verbindungsstreifen (203) zum Fixieren der Streifen (202) ausgeführt ist.

8. Luftfahrzeug (100) nach Anspruch 7,
wobei die Streifen (202) senkrecht zu dem Verbindungsstreifen (203) angeordnet sind.

9. Luftfahrzeug (100) nach einem der Ansprüche 7 oder 8,
wobei die Streifen (202) in regelmäßigen Abständen an den Verbindungsstreifen (203) fixiert sind.

10. Luftfahrzeug (100) nach einem der Ansprüche 7 bis 9,
wobei die Streifen (202) aus einem Material aus einer. Gruppe bestehend aus Kunststoff, Naturwerkstoff, Polyurethan, Polycarbonat, Schaumstoff, Glasfaser, Glaswolle, Polyamid, glasfaserverstärkter Kunststoff (GFK) gebildet sind;
wobei der Verbindungsstreifen (203) aus einem Material aus einer Gruppe bestehend aus Kunststoff, Naturwerkstoff, Polyurethan, Polycarbonat, Schaumstoff, Glasfaser, Glaswolle, Polyamid, glasfaserverstärkter Kunststoff (GFK) gebildet ist.

11. Luftfahrzeug (100) nach einem der vorhergehenden Ansprüche,
wobei die Wärmedämmungseinheit (105) zum Auftrennen, ohne dass hierdurch ein Ausfransen der Wärmedämmungseinheit (105) bewirkt wird, ausgeführt ist.

12. Verfahren (500) zur Wärme- und Schallisolierung von einem Luftfahrzeug (100), das Verfahren (500) aufweisend den Schritt:
Anbringen einer Schalldämmungseinheit (104) und einer Wärmedämmungseinheit (105) zwischen einer Kabine (102) und einer Außenhaut (103) des Luftfahrzeugs (100, 501);
wobei die Wärmedämmungseinheit (105) aus einem grobstrukturierten Gewebe (201) mit einer groben Faserung zum Vermeiden einer Kapillarbildung gebildet ist und damit ein Aufsaugen der Wärmedämmungseinheit (105) mit Wasser vermeidet.

13. Verfahren (500) nach Anspruch 12, weiterhin aufweisend die Schritte:
Anbringen einer Schalldämmungseinheit (104) an der Außenhaut (103) des Luftfahrzeugs (100, 502);
Anbringen einer Wärmedämmungseinheit (105) an der Kabine (102) des Luftfahrzeugs (100, 503).

## Claims

1. An aircraft (100) with an insulation system (101) for thermal and acoustic insulation, the aircraft (100) comprising:
a cabin (102);
an outer skin (103);
an acoustic insulation unit (104);
a thermal insulation unit (105),
wherein the acoustic insulation unit (104) is designed to insulate the aircraft acoustically (100);
wherein the thermal insulation unit (105) is designed to insulate the aircraft thermally (100);
wherein the acoustic insulation unit (104) and the thermal insulation unit (105) are arranged between the cabin (102) and the outer skin (103);
**characterized in that**
the thermal insulation unit (105) is formed from a coarsely-textured woven material (201) with a coarse fibre pattern to avoid the formation of capillaries, and thus prevents the thermal insulation unit (105) from soaking up water.

2. The aircraft (100) according to claim 1,
wherein the acoustic insulation unit (104) is attached to the outside skin (103) of the aircraft (100);
wherein the thermal insulation unit (105) is attached to the cabin (102) of the aircraft (100).

3. The aircraft (100) according to any one of the preceding claims,
wherein an air-gap (106) is present between the cabin (102) and the outer skin (103).

4. The aircraft (100) according to claims 1 or 3,
wherein the acoustic insulation unit (104) is attached to the thermal insulation unit (105), and
wherein the combination of the acoustic insulation unit (104) and the thermal insulation unit (105) is attached to the cabin (102).

5. The aircraft (100) according to claims 1 or 3,
wherein the acoustic insulation unit (104) and the thermal insulation unit (105) are attached to each other, and are attached to the outside body (103).

6. The aircraft (100) according to any one of the preceding claims,
wherein the acoustic insulation unit (104) is formed from a sound absorbing material selected from a group consisting of foam rubber, rubber, polystyrene, a sound-absorbing plastic material and a sound-absorbing natural material.

7. The aircraft (100) according to any one of the preceding claims,
wherein the thermal insulation (105) comprises:
a plurality of strips (202);
a connecting strip (203);
wherein the connecting strip (203) is designed to fix the strips.

8. The aircraft (100) according to claim 7,
wherein the strips (202) are arranged so as to be perpendicular to the connecting strip (203).

9. The aircraft (100) according to claims 7 or 8,
wherein the strips (202) are fixed to the connecting strip (203) at regularly spaced intervals.

10. The aircraft (100) according to claims 7 to 9,
wherein the strips (202) are formed from a material from the group consisting of plastic, natural material, polyurethane, polycarbonate, foamed material, glass fibre, glass wool, polyamide, and glass-fibre-reinforced plastic (GRP);
wherein the connecting strip (203) is formed from a material selected from the group consisting of plastic, natural material, polyurethane, polycarbonate, foamed material, glass fibre, glass wool, polyamide, and glass-fibre-reinforced plastic (GRP).

11. The aircraft according to any of the preceding claims,
wherein the thermal insulation unit (105) is designed to be separated, without causing fraying of the thermal insulation unit (105).

12. A method (500) for thermal insulation and acoustic insulation of an aircraft (100), the method (500) comprising the step of:
attaching an acoustic insulation unit (104) and a thermal insulation unit (105) between a cabin (102) and an outer skin (103) of the aircraft (100, 501);
wherein the thermal insulation unit (105) is formed from a coarsely-textured woven material (201) with a coarse fibre pattern to avoid the formation of capillaries, and thus prevents the thermal insulation unit (105) from soaking up water.

13. The method (500) according to claim 12, further comprising the step of:
attaching an acoustic insulation unit (104) to the outer skin (103) of the aircraft (100, 502); and
attaching a thermal insulation unit (105) to the cabin (102) of the aircraft (100, 503).

## Revendications

1. Aéronef (100) comportant un système d'isolation (101) pour l'isolation thermique et acoustique, l'aéronef (100) présentant :
- une cabine (102) ;
- une peau extérieure (103) ;
- un ensemble d'isolation acoustique (104) ;
- un ensemble d'isolation thermique (105) ;
dans lequel l'ensemble d'isolation acoustique (104) est conçu pour insonoriser l'aéronef (100) ;
dans lequel l'ensemble d'isolation thermique (105) est conçu pour isoler thermiquement l'aéronef (100) ;
dans lequel l'ensemble d'isolation acoustique (104) et l'ensemble d'isolation thermique (105) sont disposés entre la cabine (102) et la peau extérieure (103), **caractérisé en ce que** l'ensemble d'isolation thermique (105) est composé d'un tissu de structure grossière (201) avec un grain grossier pour éviter une formation capillaire, ce qui permet d'éviter une absorption d'eau par l'ensemble d'isolation thermique (105).

2. Aéronef (100) selon la revendication 1, dans lequel l'ensemble d'isolation acoustique (104) est rapporté sur la peau extérieure (103) de l'aéronef (100) ;
l'ensemble d'isolation thermique (105) est rapporté sur la cabine (102) de l'aéronef (100).

3. Aéronef (100) selon une des revendications précédentes, dans lequel
un entrefer (106) est présent entre la peau extérieure (103) et la cabine (102).

4. Aéronef (100) selon une des revendications 1 ou 3, dans lequel
l'ensemble d'isolation acoustique (104) est rapporté sur l'ensemble d'isolation thermique (105) ; et
la combinaison formée de l'ensemble d'isolation acoustique (104) et de l'ensemble d'isolation thermique (105) est rapportée sur la cabine (102).

5. Aéronef (100) selon une des revendications 1 ou 3, dans lequel
l'ensemble d'isolation acoustique (104) et l'ensemble d'isolation thermique (105) sont rapportés l'un sur l'autre sur la peau extérieure (103).

6. Aéronef (100) selon une des revendications précédentes, dans lequel
l'ensemble d'isolation acoustique (104) est composé d'un matériau d'isolation acoustique choisi dans un groupe constitué de caoutchouc mousse, caoutchouc, polystyrène, plastique isolant acoustique et matériau d'isolation acoustique naturel.

7. Aéronef (100) selon une des revendications précédentes, dans lequel
l'ensemble d'isolation thermique (105) présente :
- une pluralité de bandes (202) ;
- une bande de liaison (203) ;
la bande de liaison (203) étant conçue pour fixer les bandes (202).

8. Aéronef (100) selon la revendication 7, dans lequel les bandes (202) sont disposées perpendiculairement à la bande de liaison (203).

9. Aéronef (100) selon une des revendications 7 ou 8, dans lequel
les bandes (202) sont fixées à intervalles réguliers sur la bande de liaison (203).

10. Aéronef (100) selon une des revendications 7 à 9, dans lequel
les bandes (202) sont composées d'un matériau choisi dans un groupe constitué de matière plastique, matériau naturel, polyuréthanne, polycarbonate, mousse synthétique, fibre de verre, laine de verre, polyamide, plastique renforcé de fibres de verre (PRFV) ;
la bande de liaison (203) étant composée d'un matériau choisi dans un groupe constitué de matière plastique, matériau naturel, polyuréthanne, polycarbonate, mousse synthétique, fibre de verre, laine de verre, polyamide, plastique renforcé de fibres de verre (PRFV).

11. Aéronef (100) selon une des revendications précédentes, dans lequel
l'ensemble d'isolation thermique (1.05) est conçu pour séparer sans provoquer un effilochage de l'ensemble d'isolation thermique (105).

12. Procédé (500) d'isolation thermique et acoustique d'un aéronef (100), le procédé (500) présentant l'étape consistant à :
- rapporter un ensemble d'isolation acoustique (104) et un ensemble d'isolation thermique (105) entre une cabine (102) et une peau extérieure (103) de l'aéronef (100, 501) ;
l'ensemble d'isolation thermique (105) étant composé d'un tissu de structure grossière (201) avec un grain grossier pour éviter une formation capillaire, ce qui permet d'éviter une absorption d'eau par l'ensemble d'isolation thermique (105).

13. Procédé (500) selon la revendication 12, présentant en outre les étapes consistant à :
- rapporter un ensemble d'isolation acoustique (104) sur la peau extérieure (103) de l'aéronef (100, 502) ;
- rapporter un ensemble d'isolation thermique (105) sur la cabine (102) de l'aéronef (100, 503).
